# EUROPÄISCHE PATENTANMELDUNG

(11) **EP 1 745 857 A1**
(43) Veröffentlichungstag der Anmeldung: **24.01.2007**
(21) Anmeldenummer: 06014323.7
(22) Anmeldetag: 11.07.2006
(51) Int. Cl.: B05B 12/12, A01M 7/00

(54) **Verfahren und Vorrichtung zum selktiven Ausbringen eines Wirkstoffen**

(30) Priorität: 19.07.2005 DE 102005033575
(71) Anmelder: Amazonen-Werke H. Dreyer GmbH & Co. KG, 49205 Hasbergen (DE)
(72) Erfinder: Gervelmeyer, Nicole, 49124 Georgsmarienhütte (DE); Heringhaus, Florian, 49124 Georgsmarienhütte (DE); Wallrabenstein, Henning, 49124 Georgsmarienhütte (DE); Held, Friedrich, 49179 Ostercappeln (DE)

(57) **Zusammenfassung**

Verfahren und Vorrichtung zum selektiven Ausbringen eines Wirkstoffes auf die Bodenoberfläche mit einer Pflanzenschutzspritze, die einen mit Spritzdüsen (8) ausgestatteten Sprühausleger (2) aufweist, wobei den Spritzdüsen (8) über eine Dosiereinrichtung die auszubringende Flüssigkeit in einstellbarer Weise zugeleitet wird, wobei dem Sprühausleger und/oder Spritzdüsen eine Sensoreinrichtung (9,10) zur Selektierung und/oder Erkennung des Pflanzenbewuchses nach dem Hoch-Tief-Prinzip auf der zu behandelnden Bodenoberfläche zugeordnet ist. Um mit einfachen Mitteln ein Verfahren und eine Vorrichtung zu schaffen, welche in der Lage ist, in einfacher und schneller Weise eine Selektierung oder Erkennung des Pflanzenbewuchses, insbesondere Wildpflanzenbewuchses auf landwirtschaftlichen Flächen zu erkennen, ist vorgesehen, dass die Sensoreinrichtung als zumindest eine Lichtschranke (4) ausgebildet ist.

## Beschreibung

Die Erfindung betrifft ein Verfahren und eine Vorrichtung zum selektiven Ausbringen eines Wirkstoffes gemäß des Oberbegriffes des Patentanspruches 1.

Ein derartiges Verfahren und eine derartige Vorrichtung ist durch die DE 689 17 436 T3 beschrieben. Diese Vorrichtung weist ein Verteilergestänge mit Spritzdüsen auf. Den Spritzdüsen sind optische Detektoren zugeordnet, die mit einer zentralen Bildanalysevorrichtung verbunden sind, die eine Kamera umfasst und dem Programmiermikroprozessor Signale zuführen kann, die durch erfasste Farbunterschiede ausgelöst werden und die Aktivierung jener Düse bewirken, die den optischen Detektoren zugeordnet ist/sind, in deren Bereich die Farbunterschiede erfasst wurden. Eine derartige Vorrichtung ist relativ aufwendig.

Der Erfindung liegt die Aufgabe zugrunde, mit einfachen Mitteln ein Verfahren und eine Vorrichtung zu schaffen, welche in der Lage ist, in einfacher und schneller Weise eine Selektierung oder Erkennung des Pflanzenbewuchses, insbesondere Wildpflahzenbewuchses auf landwirtschaftlichen Flächen zu erkennen.

Diese Aufgabe wird erfindungsgemäß dadurch gelöst, dass die Sensoreinrichtung als zumindest eine Lichtschranke ausgebildet ist. Infolge dieser Maßnahme erfolgt die Selektierung der sich auf der Fläche befindliche Pflanzen über eine "Hoch-Tief-Differenzierung". So bleiben z.B. bei abgeweidetem Grünland die tiefen Kulturgräser weitestgehend verschont, und die unerwünschten hohen Wildkräuter, wie z.B. Ampfer, Distel und Brennnessel können durch das Lichtschrankenprinzip - je nach Größe und Dichte - in bestimmten räumlichen Abschnitten selektiv erkannt und bekämpft werden. In ähnlicher Weise kann eine Bekämpfung der Quecke, die über andere Feldkulturen (wie z.B. Weizen, Mais) hinauswächst, durch das erfindungsgemäße "Hoch-Tief-Prinzip" unabhängig von einer unterschiedlichen Farbgebung von Wild- und Kulturpflanzen auf einfache und kostengünstige Weise erfolgen.

In einfacher Weise lässt sich die Lichtschranke dadurch verwirklichen, dass die Lichtschranke zumindest einen Sender und zumindest einen Empfänger, sowie einen Reflektor aufweist. Um die Vorrichtung auf die jeweiligen Verhältnisse und die Nutzpflanzen sowie die Wildpflanzen bzw. dem zu bekämpfenden Pflanzenbewuchs entsprechend einstellen zu können, ist vorgesehen, dass die Bauteile der Lichtschranke mittels höhenverstellbarer Halterungselementen an dem Sprühausleger befestigt sind.

Um eine ausreichende Reaktionszeit zwischen Erkennung von Nutzpflanzen und zu bekämpfenden Pflanzen sowie der Auswertung der ermittelten Signale und die Weiterleitung entsprechender Signale über dem Bordcomputer an die Betätigungsmittel der Düse zum aktivieren und deaktivieren der Düsen zu erreichen, ist vorgesehen, dass die Bauteile der Lichtschranke an einem zusätzlichen Ausleger in einem größeren Abstand vor dem Sprühausleger mit den Düsen angeordnet sind.

Um die entsprechende Ansteuerung der Düsen zur gezielten Materialausbringung auf die zu bekämpfenden Pflanzen zu gewährleisten, ist vorgesehen, dass die Lichtschranke Signale an den Spritzcomputer übermittelt und dass aufgrund dieser Signale der Spritzcomputer entsprechend des hinterlegten Programms die Ausbringmenge der Spritzdüsen und den Ausbringzeiten und deren Ausbringdauer bestimmt.

Nach dem "Hoch-Tief-Prinzip" lässt sich somit aufgrund der eingestellten Höhe der Lichtschranke die Flüssigkeit entsprechend ausbringen.

Weitere Einzelheiten der Erfindung sind der Beispielsbeschreibung und den Zeichnungen zu entnehmen. Hierbei zeigen
- Fig. 1: die Vorrichtung in der Draufsicht und in Prinzipdarstellung,
- Fig. 2: die Ausgestaltung der Lichtschranke in der Ansicht von vorne und
- Fig. 3: eine weitere Vorrichtung in der Draufsicht und in Prinzipdarstellung.

Die Vorrichtung zum selektiven Ausbringen eines Wirkstoffes weist den an einem als Frontlader ausgebildeten Tragrahmen 1 angeordneten Spritzbalken 2 und die davor an einem Traggestänge 3 angeordnete Lichtschranke 4 auf. Der Tragrahmen, der als Frontlader ausgebildet ist, ist an einem Ackerschlepper 5 angeordnet. Auf der Rückseite des Ackerschleppers 5 ist in dem Dreipunktkraftheber der Vorratsbehälter 6 der als Spritze ausgebildeten Vorrichtung angeordnet. Die Spritze 6 weist eine Pumpe, Dosieraggregat sowie eine zu dem Spritzbalken 2 führende Leitung 7 auf. An dem Spritzbalken 2 sind quer zur Fahrtrichtung beabstandet mehrere Düsen 8 angeordnet, die einzeln oder gruppenweise zu betätigen sind, so dass je nach Betätigung über diese Düsen die Flüssigkeit entsprechend auszubringen ist. An dem vorderen Traggestänge 3 ist an dem einen Ende eine Sender- und Empfängereinheit 9 und an dem anderen Ende eine Reflektoreinheit 10 der als Lichtschranke 4 ausgebildeten Sensoreinrichtung angeordnet. Wie weiter unten beschrieben, dient diese Sensoreinrichtung 4 zur Selektierung und zur Erkennung des Pflanzenbewuchses 11 auf der zu behandelnden Bodenoberfläche 12. Die Sender- und Empfängereinheit 9 ist über als im Ausführungsbeispiel als Kabel 13 ausgebildete Übertragungseinrichtung mit einem elektronischen Bordcomputer 14 verbunden. Dieser Bordcomputer 14 ist als Spritzcomputer 14 ausgebildet. In dem Speicher des Spritzcomputers ist ein Programm hinterlegt, aufgrund dessen die Ausbringmenge bestimmt wird. Die Lichtschranke 4 übermittelt Signale an den Spritzcomputer 14. Aufgrund dieser Signale bestimmt der Spritzcomputer 14 entsprechend des hinterlegten Programms die Ausbringmenge der Spritzdüsen 8, die Ausbringzeiten und die Ausbringdauer. Hierzu werden über das Kabel 15 Signale an die den Düsen 8 zugeordneten Ventile übermittelt.

Die Sender- und Empfängereinheit 9 sowie die Reflektoreinheit 10 der Lichtschranke 4 und in höhenverstellbarer Weise an dem Traggestänge 3ngeordnet, so dass die Lichtschranke 4 in dem jeweils gewünschten Abstand zur Bodenoberfläche 12 angestellt werden kann, um nach dem "Hoch-Tief-Prinzip" den mit der Flüssigkeit zu behandelnden Pflanzenwuchs 11 zu erkennen.

Die Lichtschranke 4 ist in einem größeren Abstand vor dem Spritzausleger 2 mit den die Flüssigkeit ausbringenden Düsen 8 angeordnet.

### Die Funktionsweise ist folgende:

Zunächst wird die Lichtschranke 4, d.h. die Sender- und Empfängereinheit 9 sowie die Reflektoreinrichtung 10 auf die jeweilige Höhe der Nutzpflanzenoberfläche 12 eingestellt.

Dies heißt, dass die Sender- und der Empfängereinrichtung und die Reflektoreinheit 10 der Lichtschranke 4 in einem geringen Abstand oberhalb dieser Nutzpflanzenfläche 12 eingestellt wird. Wird die Lichtschranke 4 durch die Nutzpflanzenfläche 12 die überragende Wildpflanzen 13 unterbrochen, sendet die Lichtschranke 4 einen Impuls an den Bordcomputer 14. Aufgrund des hinterlegten Programms, unter Berücksichtigung der Fahrgeschwindigkeit und des Abstandes zwischen der Lichtschranke 4 und den Spritzdüsen 8 sendet der Bordcomputer 14 über das Kabel 15 an die Ventile der Dosiereinrichtung und/oder der Düsen 8 ein Signal, so dass die Düsen 8 entsprechend aktiviert werden, damit zum richtigen Zeitpunkt die auszubringende Flüssigkeit auf den Wildpflanzenbewuchs 11 aufgebracht wird. Hierbei berücksichtigt der Bordcomputer 14, die Dauer der Unterbrechung der Lichtschranke 4 bei den Einschaltzeiten der jeweiligen Spritzdüse 8.

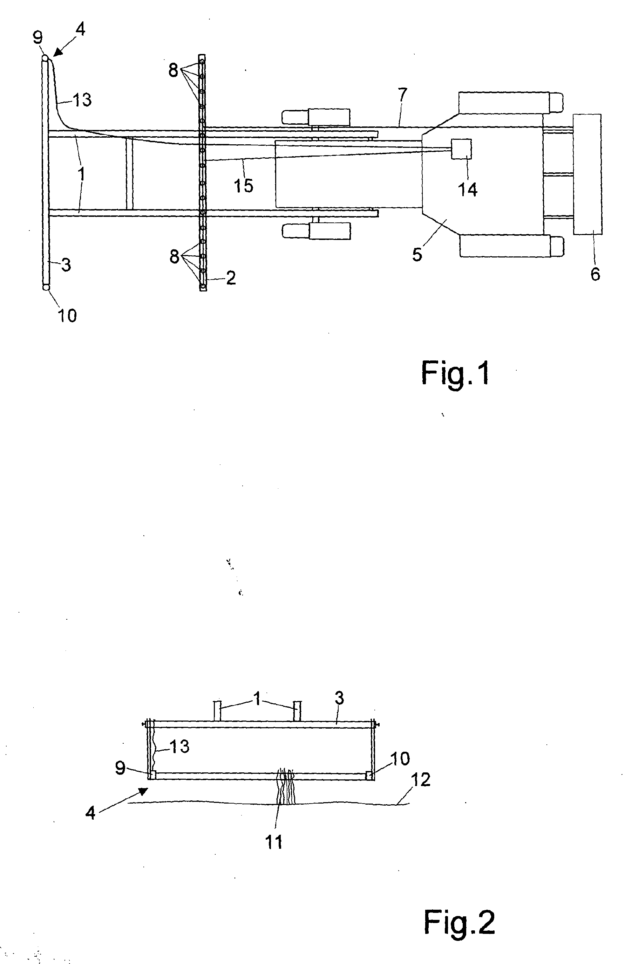

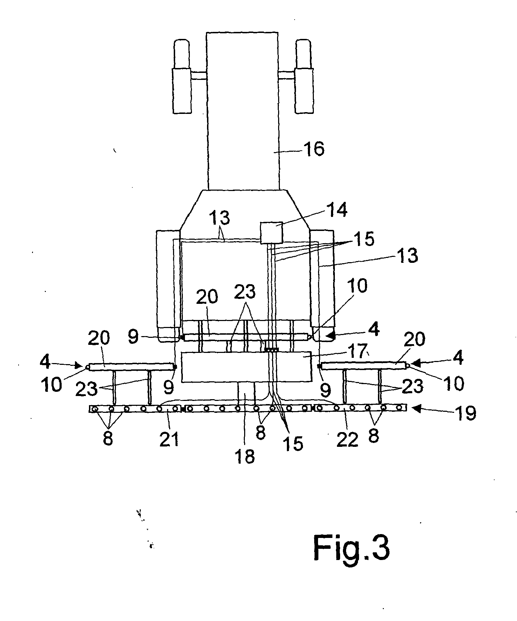

Die Vorrichtung gemäß Fig. 3 zum Selektieren, Ausbringen eines Wirkstoffes steht aus der in der Dreipunktkrafthebevorrichtung 15 an dem Ackerschlepper 16 angebaute Feldspritze 17 mit dem an einem höhenverstellbaren Rahmen 18 angeordneten mehrteiligen und Spritzdüsen 8 aufweisenden Spritzbalken 19 und der davor an einem Traggestänge 20 angeordneten Lichtschranke 4. Vor den seitlichen Auslegern 21,22 des Spritzbalkens sind an den nach hinten ragenden Verbindungsarmen 23 des Traggestänges 20 jeweils eine eine Sender- und Empfängereinheit 9 und eine Reflektoreinheit 10 aufweisende Lichtschranke 4 angeordnet. Für den mittleren Bereich ist in dem Bereich zwischen dem Ackerschlepper 16 und der Feldspritze 17 an Verbindungsarmen 23 das Traggestänge 20 die mittlere Lichtschranke 4, die ebenfalls eine Sender- und Empfängereinheit 9 und eine Reflektoreinheit 10 aufweist, angeordnet. Der Abstand der Lichtschranken 4 vor den Düsen des Spritzauslegers 19 sollte größer oder gleich 75 cm sein, um Verunreinigungen der Lichtschranke 4 durch den Sprühnebel der von den Düsen ausgebrachten Flüssigkeit zu vermeiden. Es sollte darauf geachtet werden, dass die Lichtschranken 4 in derart an den Sprühausleger 19 bzw. der Feldspritze 17 angeordnet sind, dass die auftretenden Erschütterungen möglichst klein bleiben. Die als Feldspritze 17 ausgebildete Vorrichtung zum selektiven Ausbringen eines Wirkstoffes weist den Vorratsbehälter 24, eine Pumpe, Dosieraggregate, wie Magnetventile und Gleichdruckeinrichtungen, sowie die zu dem Spritzbalken 19 führenden Leitungen 25 auf. An dem Spritzbalken 19 sind quer zur Fahrtrichtung beabstandet mehrere Düsen angeordnet, die einzeln oder gruppenweise zu betätigen sind, so dass je nach Betätigung über diese Düsen die Flüssigkeit entsprechend auszubringen ist. Die Sender- und Empfängereinheiten 9 der als Lichtschranken 4 ausgebildeten Sensoreinrichtungen sind über als im Ausführungsbeispiel als Kabel ausgebildete Übertragungseinrichtungen mit dem elektronischen Bordcomputer 14 verbunden. Die Funktionsweise der Vorrichtung gemäß Fig. 3 entspricht der Vorrichtung gemäß den Fig. 1 bis 2, so dass auf die weitere Beschreibung entsprechend zu Fig. 1 und 2 verwiesen wird.

## Patentansprüche

1. Verfahren und Vorrichtung zum selektiven Ausbringen eines Wirkstoffes auf die Bodenoberfläche mit einer Pflanzenschutzspritze, die einen mit Spritzdüsen ausgestatteten Sprühausleger aufweist, wobei den Spritzdüsen über eine Dosiereinrichtung die auszubringende Flüssigkeit in einstellbarer Weise zugeleitet wird, wobei dem Sprühausleger und/oder Spritzdüsen eine Sensoreinrichtung zur Selektierung und/oder Erkennung des Pflanzenbewuchses nach dem Hoch-Tief-Prinzip auf der zu behandelnden Bodenoberfläche zugeordnet ist, **dadurch gekennzeichnet, dass** die Sensoreinrichtung als zumindest eine Lichtschranke (4) ausgebildet ist.

2. Verfahren und Vorrichtung nach Anspruch 1, **dadurch gekennzeichnet, dass** die Lichtschranke (4) zumindest einen Sender (9, 19) und zumindest einen Empfänger (10) aufweist.

3. Verfahren und Vorrichtung nach Anspruch 1, **dadurch gekennzeichnet, dass** die Bauteile der Lichtschranke (4) mittels höhenverstellbaren Halterungselementen an dem Sprühausleger (2, 19) befestigt sind.

4. Verfahren und Vorrichtung nach Anspruch 1, **dadurch gekennzeichnet, dass** die Bauteile (9,10) der Lichtschranke 4 an einem zusätzlichen Ausleger (3) in einem größeren Abstand von dem Sprühausleger (2) angeordnet sind.

5. Verfahren und Vorrichtung nach Anspruch 1, **dadurch gekennzeichnet, dass** ein Spritzcomputer (14) vorgesehen ist, dass der Spritzcomputer (14) die Ausbringmenge aufgrund eines in seinem Speicher hinterlegten Programms bestimmt, dass die Lichtschranke (4) Signale an den Spritzcomputer (14) übermittelt und das aufgrund dieser Signale der Spritzcomputer (14) entsprechend des hinterlegten Programms die Ausbringmenge der Spritzdüsen (8) und den Ausbringzeiten und deren Ausbringdauer bestimmt.

6. Verfahren und Vorrichtung nach einem oder mehreren der vorstehenden Ansprüche, **dadurch gekennzeichnet, dass** aufgrund der eingestellten Höhe der Lichtschranke (4) die Flüssigkeiten ausgebracht werden.
